# EUROPÄISCHE PATENTSCHRIFT

(11) **EP 2 074 449 B1**
(45) Veröffentlichungstag und Bekanntmachung des Hinweises auf die Patenterteilung: **09.07.2014**
(21) Anmeldenummer: 07818718.4
(22) Anmeldetag: 05.10.2007
(51) Int. Cl.: G02B 6/00, F21V 8/00, B60Q 1/00, F21S 8/10

(54) **FAHRZEUGSCHEINWERFER**
VEHICLE HEADLIGHT
PHARE DE VÉHICULE

(30) Priorität: 30.10.2006 DE 102006051059
(43) Veröffentlichungstag der Anmeldung: 01.07.2009
(73) Patentinhaber: Bayerische Motoren Werke Aktiengesellschaft, 80809 München (DE)
(72) Erfinder: ERDL, Helmut, 83569 Vogtareuth (DE)
(74) Vertreter: Mayer-Martin, Christian
(86) Internationale Anmeldenummer: PCT/EP2007/008641
(87) Internationale Veröffentlichungsnummer: WO 2008/052633

(56) Entgegenhaltungen:
- DE-A1-102004 003 402
- DE-A1-102004 017 448
- FR-A- 2 858 278
- US-A1- 2003 223 250

## Beschreibung

Die Erfindung betrifft einen Fahrzeugscheinwerfer mit einem Leuchtring.

Auch aufgrund designerischer Vorgaben wird insbesondere im Fahrzeugscheinwerferbereich häufig angestrebt, ringförmige bzw. ringähnliche Strukturen als Beleuchtungsmittel einzusetzen.

Aus der DE102004003402 A1 ist bereits ein Fahrzeugscheinwerfer mit einem Lichtleitelement bekannt. Dabei wird Licht einer Lichtquelle am Brennpunkt eines Reflektors in den Querschnitt eines Lichtleiters eingekoppelt (Anspruch 1) und/oder an einer Brennlinie eines Reflektors in eine Lichteintrittsfläche eines Leuchtringes, der in diesem Dokument als Lichtleiter ausgeführt ist, eingekoppelt (Ansprüche 8 und 9).

Dieser zuletzt genannte Leuchtring wirkt in diesem Stand der Technik als undefinierte Streuoptik, welche die Rohlichtverteilung des Reflektors ebenso undefiniert aufweitet. Die Erfüllung jüngerer gesetzlicher Vorgaben, insbesondere hinsichtlich eines Tagfahrlichtes, ist mit einer solchen undefinierten Streuoptik nicht oder nur auf äußerst ineffiziente und unwirtschaftliche Weise möglich.

Aus der DE19833299 C1 ist eine Beleuchtungseinrichtung bekannt mit einem Leuchtmittel, dessen Lichtstrahlen an einem im Strahlengang angeordneten transparenten Lichtbrechungselement abgelenkt werden. Das plattenartige Lichtbrechungselement ist in der Art eines Fresnelprismas ausgebildet, bei dem verschiedene Lichtbrechungszonen stufenförmig zusammen geschobenen Prismenzonen eines Prismenkörpers entsprechen.

Aus der DE 10 2004 046 386 A1 ist ein Lichtleiter bekannt, aus dem Licht durch eine Reflexionsstruktur an einer Lichtaustrittsseite aus dem Lichtleiter herausgelenkt wird. Die Reflexionsstruktur ist dabei durch Prismen gebildet, die unterschiedliche Querschnittsform haben.

Der Erfindung liegt nun die Aufgabe zu Grunde, einen Leuchtring in einem Fahrzeugscheinwerfer effizient zu betreiben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, einen Fahrzeugscheinwerfer mit einem Leuchtring auszustatten, wobei der Leuchtring derart ausgeführt ist, dass verschiedene Leuchtringsektoren des Leuchtrings Licht bevorzugt in verschiedene definierte Richtungen abstrahlen.

Dadurch können Lichtstrahlen unter Berücksichtigung gesetzlicher Vorgaben ausgerichtet werden, und damit auf wirtschaftliche und effiziente Weise gesetzliche Vorgaben auch mittels eines Leuchtrings erfüllt werden. Dazu können durch die Erfindung auch geometrische Strukturen des Fahrzeuges oder des Fahrzeugscheinwerfers, wie beispielsweise eine Blende, berücksichtigt werden, und beispielsweise die Lichtstrahlen gezielt so gerichtet werden, dass Abschattungen durch die Blende vermieden oder reduziert werden.

Vorzugsweise weist ein Fahrzeugscheinwerfer eine Lichtquelle und einen Leuchtring auf, in den Licht der Lichtquelle eintritt. Eine Vielzahl von Prismen, die auf der Vorderseite oder der Rückseite des Leuchtringes umlaufend angeordnet sind, bewirkt ein Austreten des Lichts aus dem Leuchtring. Die Prismen sind dazu derart ausgeführt, dass von einem ersten Leuchtringsektor Licht im Wesentlichen (je nach Ausführungsvariante mindestens 30%, 50 %, 70 % oder 90 % der aus dem entsprechenden Leuchtringsektor stammenden Lichtstärke) parallel zu einer ersten Hauptabstrahlgeraden austritt, und dass von einem zweiten Leuchtringsektor Licht im Wesentlichen (je nach Ausführungsvariante mindestens 30%, 50 %, 70 % oder 90 % der aus dem entsprechenden Leuchtringsektor stammenden Lichtstärke) parallel zu einer zweiten von der ersten Hauptabstrahlgeraden verschiedenen Hauptabstrahlgeraden austritt.

Durch die Verwendung der Prismenoptik wird eine definierte und gerichtete Aufweitung der vom Reflektor kommenden Rohstrahlen erreicht, wodurch es möglich ist, gesetzliche Vorgaben unter Berücksichtigung der Scheinwerferausführung oder der Fahrzeugausführung auf effiziente Weise einzuhalten. Die Verwendung üblicher Streuoptiken, beispielsweise Zylinder-, oder Kissenoptiken, würden dagegen lediglich eine rotationssymmetrische Aufweitung der Rohstrahlen bewirken.

Der im Wesentlichen für Licht transparente, aus Kunststoff oder Glas bestehende, Leuchtring kann im Wesentlichen die Gestalt eines Torus aufweisen. Im Rahmen der Erfindung liegen dabei aber auch Leuchtringe, deren Form von einem idealen Torus abweicht. So müssen weder der Torus noch alle Torusquerschnittflächen genau kreisförmig sein. Elliptische Formen liegen beispielsweise ebenso im Rahmen der Erfindung wie Leuchtringe mit einem abgeplatteten Torusquerschnittkreis, insbesondere an der Vorder- oder Rückseite des Leuchtringes. Die Prismen sind vorzugsweise durch entsprechende Ausnehmungen oder entsprechende auskragende Strukturen umlaufend auf der Vorder- und/oder Rückseite des Leuchtringes gebildet und ragen radial in Richtung Mittelpunkt des Torusquerschnittkreises oder vom Mittelpunkt des Torusquerschnittkreises weg.

Die Leuchtringsektoren können gleiche oder unterschiedliche Größe haben, und beispielsweise jeweils 5 Grad, 10 Grad, 15 Grad, 30 Grad, 45 Grad, 60 Grad oder 90 Grad aufspannen.

Besonders bevorzugt ist vorgesehen, dass der erste Leuchtringsektor dem zweiten Leuchtringsektor gegenüber liegt, und dass sich die erste Hauptabstrahlgerade und die zweite Hauptabstrahlgerade kreuzen. Dies ist insbesondere dann vorteilhaft, wenn dem Leuchtring eine Blende vorgelagert ist. Denn durch die genannte Kreuzung der Hauptabstrahlgeraden können Abschattungen durch die Blende reduziert werden.

Vorzugsweise basieren die Prismen jeweils eines Leuchtringsektors auf einem ringsektorförmigen Ausschnitt eines Fresnelprismas. Dadurch wird die Herstellung eines zuverlässigen und effizienten erfindungsgemäßen Fahrzeugscheinwerfers vereinfacht.

Die Prismen sind vorzugsweise derart ausgeführt, dass das insbesondere an der Ringrückseite in den Leuchtring eintretende Licht durch die Prismen gestreut und/oder abgelenkt wird, um dann basierend auf dieser Streuung und/oder Ablenkung wieder an der Vorderseite des Leuchtringes auszutreten.

Gemäß einer besonders bevorzugten Ausführungsform weist der Fahrzeugscheinwerfer einen Reflektor auf, der derart ausgeführt ist, dass von der Lichtquelle abgestrahltes Licht in einer, insbesondere einen Kreis bildenden Brenntinie fokussiert wird, welche im Eintrittsbereich des Leuchtringes liegt, Dadurch tritt das durch den Reflektor reflektierte Licht zu einem großen Anteil in den Leuchtring ein. Der Eintrittsbereich des Leuchtringes liegt vorzugsweise an der Rückseite des Leuchtringes.

Gemäß einer alternativen oder ergänzenden (beispielsweise im Falle eines Fahrzeugscheinwerfers mit zwei Leuchtringen) Ausführung umfasst der oder ein weiterer Leuchtring einen Lichtleiter, wobei ein Reflektor des Fahrzeugscheinwerfers derart ausgeführt ist, dass von der Lichtquelle abgestrahltes Licht in einem Brennpunkt fokussiert wird, welcher in einem Einkoppelbereich des Leuchtringes liegt. Dadurch wird Licht in den einen Lichtleiter umfassenden Leuchtring ein. Der Leuchtring kann dabei einen von der Einkoppelstelle zum eigentlichen ringförmigen Teil des Leuchtringes lichtführenden, beispielsweise geraden, Lichtleiter umfassen. Anstelle der Lichteinspeisung über Lichtquelle und Reflektor ist in dieser Ausführungsvariante alternativ vorgesehen, dass das Licht einer Leuchtdiode, insbesondere direkt, in den Lichtleiter eingespeist wird.

Vorzugsweise sind dabei die Prismen oder anstelle der Prismen andere Streukörper derart im oder am Lichtleiter angeordnet und ausgeführt, dass das in den Leuchtring eingekoppelte Licht durch die Prismen oder Streukörper abgelenkt und/oder ausgekoppelt wird, insbesondere derart, dass von einem ersten Leuchtringsektor Licht im Wesentlichen (je nach Ausführungsvariante mindestens 30%, 50 %, 70 % oder 90 % der aus dem entsprechenden Leuchtringsektor stammenden Lichtstärke) parallel zu einer ersten Hauptabstrahlgeraden austritt, und dass von einem zweiten Leuchtringsektor Licht im Wesentlichen (je nach Ausführungsvariante mindestens 30%, 50 %, 70 % oder 90 % der aus dem entsprechenden Leuchtringsektor stammenden Lichtstärke) parallel zu einer zweiten von der ersten Hauptabstrahlgeraden verschiedenen Hauptabstrahlgeraden austritt.

Im Folgenden wird die Erfindung anhand von Beispielen unter Bezugnahme auf die folgenden Figuren näher erläutert:
- Figur 1: zeigt eine schematische Schnittdarstellung eines Kraftfahrzeugscheinwerfers;
- Figur 2: zeigt eine schematische Darstellung eines Leuchtringes in Draufsicht;
- Figur 3: veranschaulicht die Wirkung einer Prismenstruktur auf einem Leuchtringsektor;
- Figur 4: veranschaulicht den Zusammenhang zwischen einem Prisma und einer Prismenstruktur auf einem Leuchtring;
- Figur 5: zeigt eine schematische Darstellung eines Leuchtringes in Draufsicht;
- Figur 6: zeigt einen Ausschnitt eines Leuchtringes;
- Figur 7: zeigt schematisch einen Strahlengang eines Leuchtringes.

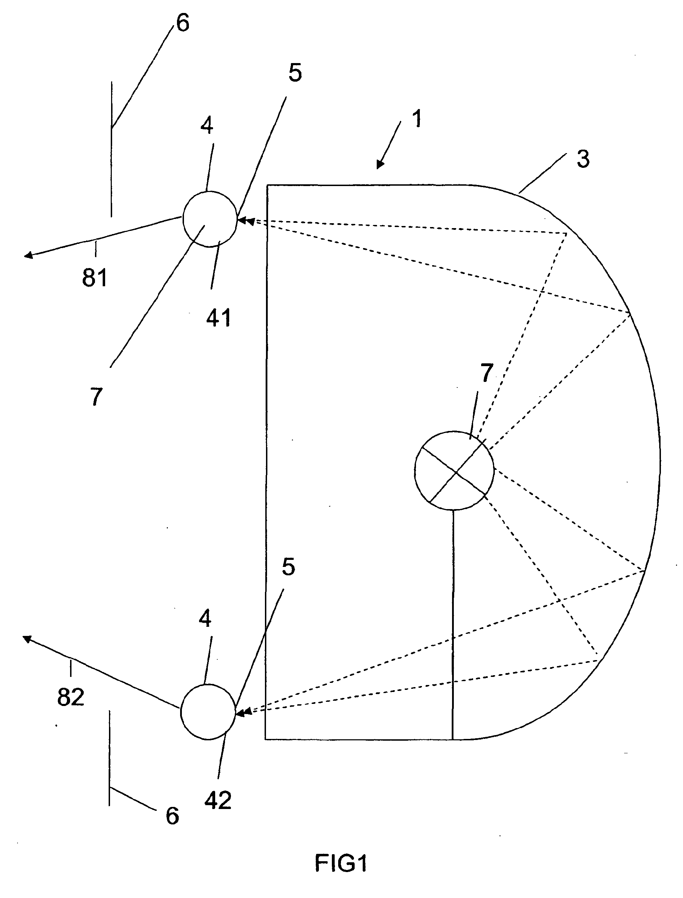

In Figur 1 ist ein Fahrzeugscheinwerfer 1 dargestellt mit einem Gehäuse 2, das einen Reflektor 3 umfasst. Das von einer Lichtquelle 7 abgestrahlte Licht wird über den Reflektor 3 auf eine kreisförmige Brennlinie abgebildet, welche mit der Licht-Eintrittsfläche 5 auf der Rückseite eines Leuchtringes 4 im Wesentlichen zusammenfällt. Der Leuchtring 4 ist hier im Querschnitt dargestellt. Die Leuchtring- oder Torusquerschnittfläche (Torusquerschnittkreis) 7 ist in dieser Figur kreisförmig (Torusquerschnittkreis) dargestellt.

Durch nicht dargestellte Prismen auf der Rückseite des Leuchtringes 4 wird das eintretende Licht gestreut und definiert abgelenkt, so dass das Licht an der Vorderseite des Leuchtringes mit definierter Aufweitung im Wesentlichen in definierter Richtung wieder abgestrahlt wird bzw. wieder aus dem Leuchtring 4 austritt.

Um Abschattungen durch eine dem Fahrzeugscheinwerfer 1 vorgelagerte Blende 6 zu vermeiden, wird das Licht von verschiedenen gegenüber liegenden Leuchtringsektoren 41,42 im Wesentlichen entlang zweier verschiedener Hauptabstrahlgeraden 81,82 abgestrahlt, die sich vorzugsweise kreuzen.

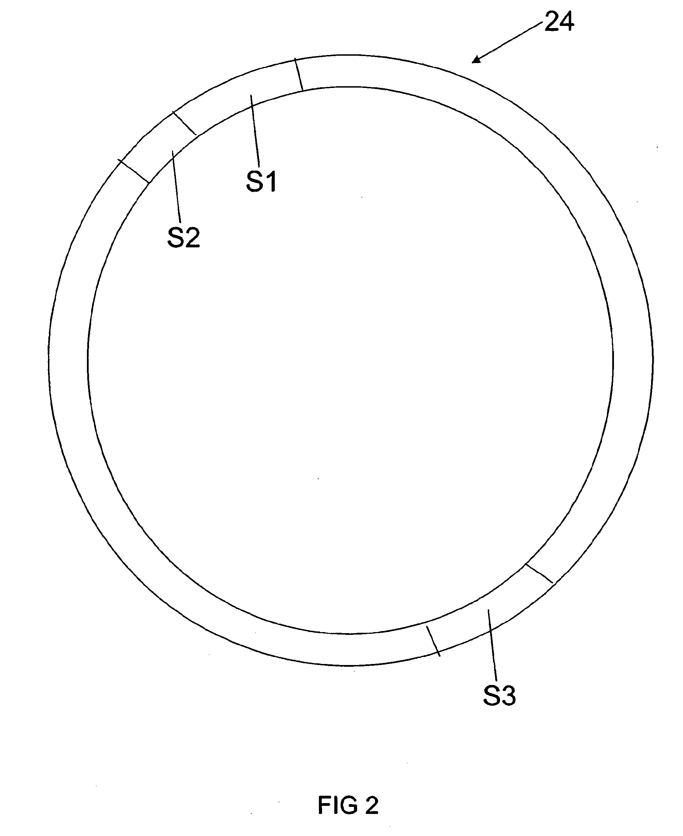

Figur 2 zeigt einen Leuchtring 24 in Draufsicht mit verschiedenen Leuchtringsektoren S1,S2,S3, wobei die Leuchtringsektoren S1 und S3 sich im Wesentlichen gegenüber liegen. Die Abmessungen der Leuchtringsektoren S1,S2,S3 oder die Winkel, die durch die Leuchtringsektoren S1,S2,S3 aufgespannt werden, können je nach Ausführungsvariante der Erfindung variieren.

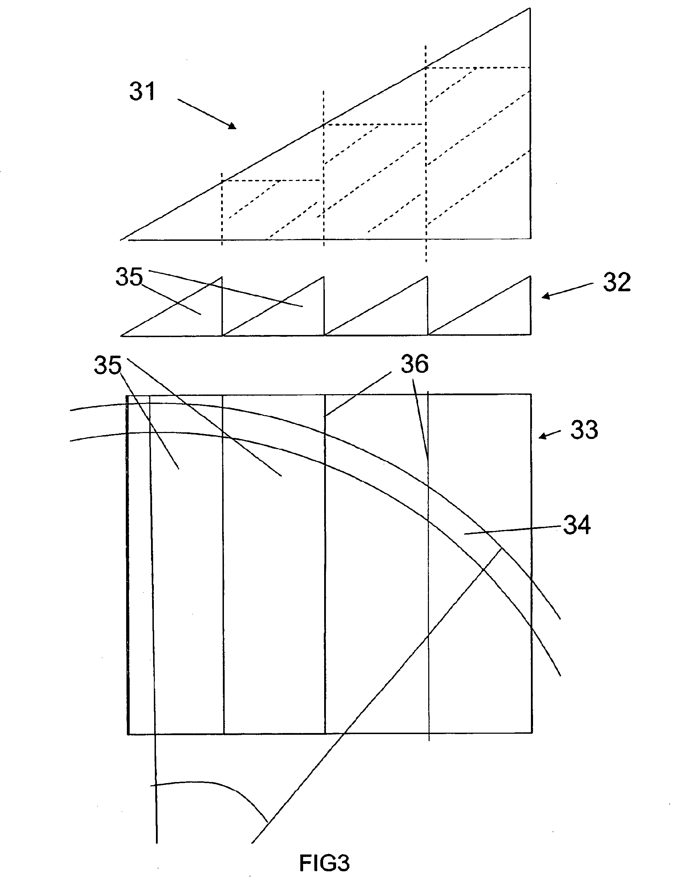

Figur 3 zeigt oben in Schnittdarstellung ein Prisma 31, durch das Licht definiert gestreut und/oder abgelenkt werden kann. Durch ein Entfernen der schraffiert dargestellten Säulen und ein Herabsetzen (Zurückstufen) der verbleibenden prismatischen Strukturen entsteht ein Fresnelprisma 32, das hinsichtlich einfallenden Lichts von oben oder unten im Wesentlichen die gleichen optischen Wirkungen hat, wie das Prisma 31.

Unten ist ein solches Fresnelprisma 33 in Draufsicht dargestellt. Wird nun aus dem Fresnelprisma 33 ein ringsektorförmiger Abschnitt 34 von oben ausgestanzt und auf einen entsprechenden Leuchtringsektor aufgebracht, so entsteht ein Leuchtringsektor mit Prismen, die einen ringsektorförmigen Ausschnitt eines Fresnelprismas bilden. Verschiedenen Leuchtringsektoren können dabei gezielt verschieden ausgerichtete oder verschieden steile Fresnelprismen zugeordnet oder aufgeprägt werden.

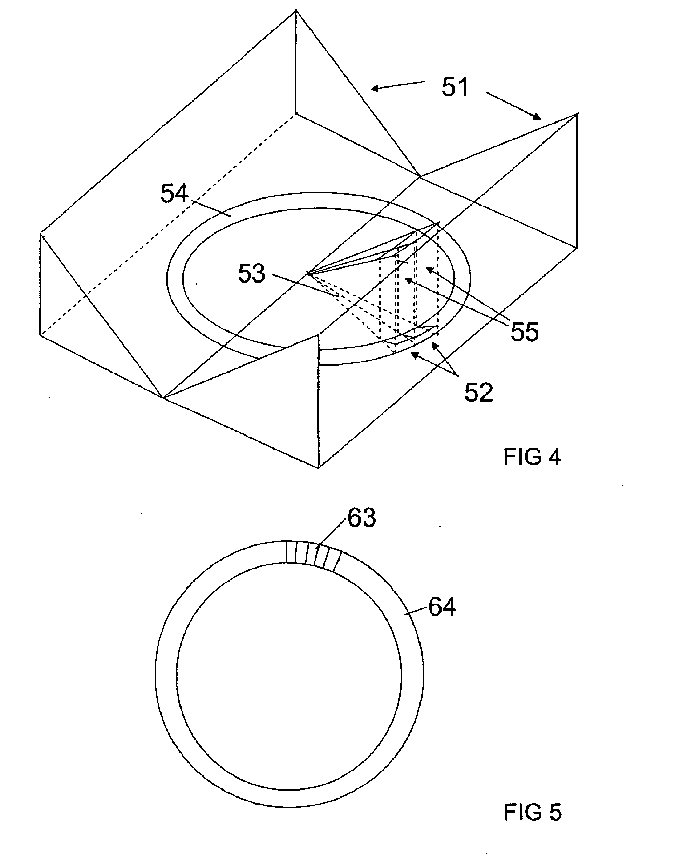

Die verschiedenen Teilprismen 35 des Fresnelprismas 32 werden in Draufsicht durch Rückstufungslinien 36 voneinander getrennt. Diese Rückstufungslinien 36 müssen nicht - wie in diesem Beispiel - parallele Geraden bilden, sondern können auch sternförmig vom Mittelpunkt des Leuchtringes ausgehende auseinander laufende Geraden (siehe Figuren 4 und Figur 5) bilden oder eine beliebige andere Gestalt haben.

Für die Erzeugung der Kreuzablenkung zeigt Figur 4 zwei gegenüberliegende jeweils eine optische Fläche definierende Prismen 51, die jeweils einer Hälfte des Leuchtringes 54 zugeordnet sind. Je nach geforderter Fronterscheinung des Ringes, werden in der Ebene des Leuchtringes 54 Rückstufungslinien oder Begrenzungslinien 53 definiert. In diesem Beispiel entsprechen die Rückstufungslinien oder Begrenzungslinien 53 einer äquidistanten umlaufenden Optikstruktur mit konstanter Teilung. Zunächst definieren die Begrenzungslinien 53 Prismenkeile 55. Die entsprechenden optischen Flächen werden entsprechend den Begrenzungslinien 53 zurück gestuft (wie anhand von Figur 3 erläutert), um analog den Fresnelschen Linsen eine realisierbare Bauhöhe der Teilprismen 52 auf der Leuchtringrückseite zu erhalten.

Figur 5 zeigt noch einmal die Begrenzungslinien 63 auf dem Leuchtring 64 in Draufsicht.

Die vorstehenden Erläuterungen dienen dem Verständnis der Erfindung. Die tatsächliche Herstellung eines erfindungsgemäßen Leuchtringes kann zwar auf diesen Überlegungen basieren, erfolgt aber beispielsweise basierend auf einem Spritzgussverfahren, dessen Ergebnis ein einstückiger Leuchtring samt vorgegebener Prismenstrukturen ist. Die Erstellung der entsprechenden Spritzgussformen basiert aber wieder auf oben genannten Überlegungen und entsprechenden Berechnungen.

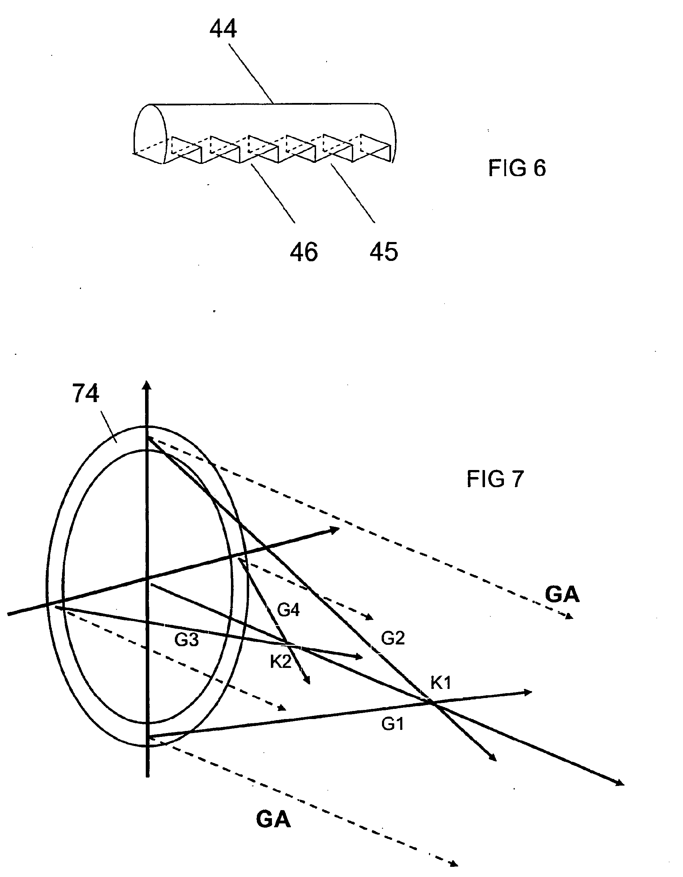

Figur 6 zeigt zur Veranschaulichung eine perspektivische Darstellung eines Leuchtringsektors 44 mit einer auf der Rückseite 45 des Leuchtringes 44 angeordneten vereinfachten Prismenstruktur 46 im Sinne eines Fresnelprismas. Bei der dargestellten beispielhaften Ausführung ist der Leuchtringquerschnittskreis auf der Rückseite des Leuchtringes abgeplattet.

In Figur 7 ist ein Leuchtring 74 dargestellt. Das von gegenüber liegenden Leuchtringsektoren abgestrahlte Licht wird im Wesentlichen entlang von Hauptabstrahlgeraden G1 und G2 bzw. G3 und G4 abgestrahlt, die sich in Kreuzungspunkten K1 bzw. K2 kreuzen. Die gestrichelt dargestellten Linien GA zeigen die Abstrahlrichtung des Rohlicht-Reflektors.

## Patentansprüche

1. Fahrzeugscheinwerfer (1)
mit einer Lichtquelle (7),
mit einem Leuchtring (4), in den Licht der Lichtquelle (7) eintritt,
mit einer dem Leuchtring vorgelagerten Blende (6),
mit einer Vielzahl von Prismen (35,46), die auf der Vorderseite oder der Rückseite (45) des Leuchtringes (4) angeordnet sind, um ein Austreten des Lichts aus dem Leuchtring (4) zu bewirken,
bei dem die Prismen (35,46) derart ausgeführt sind, dass von einem ersten Leuchtringsektor (41) Licht im Wesentlichen entlang einer ersten Hauptabstrahlgeraden (81) austritt, und dass von einem zweiten Leuchtringsektor (42) Licht im Wesentlichen entlang einer zweiten Hauptabstrahlgeraden (82) austritt,
bei dem der erste Leuchtringsektor dem zweiten Leuchtringsektor gegenüber liegt, und
bei dem sich die erste Hauptabstrahlgerade und die zweite Hauptabstrahlgerade derart kreuzen, dass durch die Kreuzung der Hauptabstrahlgeraden Abschattungen durch die vor dem Leuchtring gelagerte Blende gegenüber dem Fall nicht gekreuzter Hauptabstrahlgeraden reduziert werden.

2. Fahrzeugscheinwerfer (1) nach Anspruch 1 bei dem die Prismen (35,46) leuchtringsektorweise einen ringsektorförmigen Ausschnitt eines Fresnelprismas (32) bilden.

3. Fahrzeugscheinwerfer (1) nach einem der vorhergehenden Ansprüche, bei dem die Prismen (35,46) derart ausgeführt sind, dass das in den Leuchtring (4) eingetretene Licht durch die Prismen (35,46) gestreut und/oder abgelenkt wird.

4. Fahrzeugscheinwerfer (1) nach einem der vorhergehenden Ansprüche mit einem Reflektor (3), der derart ausgeführt ist, dass von der Lichtquelle (7) abgestrahltes Licht in einer Brennlinie fokussiert wird, welche im Eintrittsbereich (5) des Leuchtringes (4) liegt.

5. Fahrzeugscheinwerfer (1) nach Anspruch 4, bei dem der Eintrittsbereich (5) des Leuchtringes an der Rückseite des Leuchtringes liegt.

6. Fahrzeugscheinwerfer (1) nach einem der vorhergehenden Ansprüche, bei dem ein Leuchtring als Lichtleiter ausgeführt ist oder einen Lichtleiter umfasst,
mit einem Reflektor, der derart ausgeführt ist, dass von der Lichtquelle abgestrahltes Licht in einem Brennpunkt fokussiert wird, welcher in einem Einkoppelbereich des Leuchtringes liegt.

7. Fahrzeugscheinwerfer (1) nach Anspruch 6,
bei dem die Prismen derart ausgeführt sind, dass das in den Leuchtring eingekoppelte Licht durch die Prismen abgelenkt und/oder ausgekoppeltwird.

## Claims

1. A vehicle headlamp (1)
with a light source (7),
with a light ring (4) into which light enters from the light source (7), and
a shutter (6) mounted in front of the light ring, and
a plurality of prisms (35, 46) disposed on the front or back (45) of the light ring to cause light to be emitted from the light ring (4),
wherein the prisms (35, 46) are constructed so that light from a first light ring sector (41) emerges substantially along a first main emission line (81) and light from a second light ring sector (42) emerges substantially along a second main emission line (82),
wherein the first light ring sector is opposite the second light ring sector and
wherein the first main emission line and the second main emission line intersect so that as a result of the intersection, shading by the shutter mounted in front of the light ring is reduced compared with the case where the main emission lines do not intersect.

2. A vehicle headlamp (1) according to claim 1, wherein the prisms (35, 46) in each light ring sector form a ring sector shaped portion of a Fresnel prism (32).

3. A vehicle headlamp (1) according to any of the preceding claims, wherein the prisms (35, 46) are constructed so that the light entering the light ring (4) is scattered and/or deflected by the prisms (35, 46).

4. A vehicle headlamp (1) according to any of the preceding claims with a reflector (3) constructed so that light emitted by the light source (7) is focused along a focal line situated in the entry region (5) of the light ring (4).

5. A vehicle headlamp (1) according to claim 4, wherein the entry region (5) of the light ring is at the back of the light ring.

6. A vehicle headlamp (1) according to any of the preceding claims, wherein a light ring is constructed as an optical waveguide or comprises an optical waveguide,
with a reflector constructed so that light emitted by the light source is focused at a focal point situated in a coupling-in region of the light ring.

7. A vehicle headlamp (1) according to claim 6, wherein the prisms are constructed so that light coupled into the light ring is deflected and/or decoupled by the prisms.

## Revendications

1. Phare de véhicule (1) comportant :
une source de lumière (7),
un anneau lumineux (4) dans lequel pénètre la lumière émise par la source de lumière (7),
un écran (6) monté en amont de l'anneau lumineux,
plusieurs prismes (35, 46) qui sont montés sur la face avant ou sur la face arrière (45) de l'anneau lumineux (4) pour permettre à la lumière de sortir de cet anneau lumineux (4),
dans lequel les prismes (35, 46) sont réalisés de sorte que la lumière sorte d'un premier secteur (41) de l'anneau lumineux, essentiellement le long d'une première ligne de rayonnement principale (81) et que, la lumière sorte d'un second secteur de l'anneau lumineux (42) essentiellement le long d'une seconde ligne de rayonnement principale (82),
le premier secteur de l'anneau lumineux est opposé au second secteur de l'anneau lumineux,
la première ligne de rayonnement principale et la seconde ligne de rayonnement principale se croisent de sorte que du fait du croisement des lignes de rayonnement principales, l'occultation au travers de l'écran monté en amont de l'anneau lumineux soit réduite par rapport au cas de lignes de rayonnement principale qui ne se croisent pas.

2. Phare de véhicule (1) conforme à la revendication 1, dans lequel les prismes (35, 46) forment à la manière de secteurs d'anneau lumineux une section en forme de secteur annulaire d'un prisme de Fresnel (32).

3. Phare de véhicule (1) conforme à l'une des revendications précédentes, dans lequel les prismes (35, 46) sont réalisés de sorte que la lumière pénétrant dans l'anneau lumineux (4) soit dispersée et/ou déviée au travers des prismes (35, 46).

4. Phare de véhicule (1) conforme à l'une des revendications précédentes, comportant un récepteur (3) réalisé de sorte que la lumière émise par la source de lumière (7) soit focalisée sur un foyer qui est situé dans la zone d'entrée (5) de l'anneau lumineux (4).

5. Phare de véhicule (1) conforme à la revendication 4, dans lequel la zone d'entrée (5) de l'anneau lumineux est située sur la face arrière de cet anneau lumineux.

6. Phare de véhicule (1) conforme à l'une des revendications précédentes, dans lequel un anneau lumineux est réalisé sous la forme d'un guide de lumière ou comporte un guide de lumière,
comportant un réflecteur qui est réalisé de sorte que la lumière émise par la source de lumière soit focalisée sur un foyer qui est situé dans une zone d'accouplement de l'anneau lumineux.

7. Phare de véhicule (1) conforme à la revendication 6, dans lequel les prismes sont réalisés de sorte que la lumière accouplée dans l'anneau lumineux soit déviée et/ou découplée au travers des prismes.
